# EUROPÄISCHE PATENTSCHRIFT

(11) **EP 0 676 316 B1**
(45) Veröffentlichungstag und Bekanntmachung des Hinweises auf die Patenterteilung: **07.04.1999**
(21) Anmeldenummer: 95102573.3
(22) Anmeldetag: 23.02.1995
(51) Int. Cl.: B60R 21/13, B21D 26/02

(54) **Überrollbügel für ein Kraftfahrzeug**
Roll bar for a vehicle
Arceau de sécurité pour véhicule

(30) Priorität: 08.04.1994 DE 4412108
(43) Veröffentlichungstag der Anmeldung: 11.10.1995
(73) Patentinhaber: Dr.Ing.h.c. F. Porsche Aktiengesellschaft, 70435 Stuttgart (DE)
(72) Erfinder: Zepnik, Siegfried, D-75223 Niefern-Öschelbronn (DE); Homann, Bodo, D-71296 Heimsheim (DE); Henn, Uwe, D-71299 Wimsheim (DE)

(56) Entgegenhaltungen:
- DE-U- 8 523 831
- US-A- 3 985 386
- US-A- 4 148 504

## Beschreibung

Die Erfindung bezieht sich auf einen Überrollbügel für ein Kraftfahrzeug, insbesondere für ein Cabriolet, der aus mehreren miteinander verbundenen Rahmenteilen zusammengesetzt und an seinen seitlich außenliegenden unteren Enden am feststehenden Aufbau befestigt ist.

Aus dem gattungsbildenden DE-U-85 23 831 geht ein Cabriolet hervor, bei dem hinter den vorderen Sitzen ein Überrollbügel angeordnet ist.

Dieser Überrollbügel besteht aus zwei hinter den Sitzen angeordneten umgekehrt U-förmigen Rahmenteilen, die in gleicher Ebene mit Abstand nebeneinanderliegend an einem waagrechten Rahmenteil befestigt sind.

Ferner umfaßt dieser Rollbügel hintere, als Stützarme wirkende Rahmenteile, die mit angeschweißten Buchsen der U-förmigen Rahmenteile fest verbunden sind.

Alle Rahmenteile dieses Überrollbügels werden durch geradlinige oder gebogene Stahlrohre mit kreisförmigem Querschnitt gebildet, wobei jedes Rahmenteil über seine gesamte Längserstreckung einen gleichbleibenden Querschnitt aufweist.

Diesem Überrollbügel haftet der Nachteil an, daß die Dimensionierung des Rohrquerschnitts der Rahmenteile der größten auftretenden Beanspruchung angepaßt werden muß, so daß der Überrollbügel zumindest in Teilbereichen überdimensioniert ist, viel Bauraum beansprucht und aufgrund der Stahlbauweise ein hohes Gewicht aufweist.

Ferner müssen die Schweißnähte zwischen dem waagrechten Rahmenteil und den beiden U-förmigen Rahmenteilen allein die auftretenden Kräfte übertragen.

Die US-A-4,148,504 offenbart einen Überrollbügel für Kraftfahrzeuge, der sich aus mehreren rohrförmigen Rahmenteilen zusammensetzt. Im gemeinsamen Verbindungsbereich von zwei angrenzenden Rahmenteilen ist ein mit mehreren Bohrungen versehenes rohrförmiges Verbindungsstück vorgesehen, das abschnittsweise in beide Rahmenteile hineinragt und mit jedem Rahmenteil über eine Befestigungsschraube und eine aufgedrehte Mutter verbunden ist. Die rohrförmigen Rahmenteile weisen entlang ihrer Längserstreckung jeweils einen gleichbleibenden Querschnitt auf. Die mit mehreren Bohrungen versehenen Verbindungsstücke sind als Schwachstellen dieses Überrollbügels anzusehen, der bei einem Überschlag einer sehr hohen Belastung ausgesetzt ist.

Aus der US-A-4,795,188 geht ein hinter einer Fahrerkabine eines Trucks angeordneter Überrollbügel hervor, der sich aus einem vorderen, etwa U-förmig gebogenen Rahmenteil und einem hinteren Stützbügel zusammensetzt, wobei Rahmenteil und Stützbügel an gleichgerichteten Abschnitten örtlich über Klemmelemente miteinander verbunden sind. Rahmenteil und Stützbügel weisen entlang ihrer Längserstreckung jeweils einen gleichbleibenden Querschnitt auf.

Aus der EP-A-0 195 157 ist es bekannt, ein Rahmenteil für ein Kraftfahrzeug durch Einlegen eines vorgeformten rohrförmigen Rohlings in eine Form und anschließendes Innenhochdruck-Umformen herzustellen.

Die DE-A-42 14 557 behandelt ein Verfahren zum hydraulischen Aufweiten von geschlossenen Hohlprofilen, insbesondere mit in Längsrichtung des Hohlprofiles unterschiedlichen Querschnitten. In der Beschreibungseinleitung dieser Schrift ist erwähnt, daß für die Herstellung der Karosserie von Kraftfahrzeugen an bestimmten Stellen, beispielsweise Türholmen, Profile mit sehr komplizierten Querschnittsformen und mit über die Länge unterschiedlichen Querschnitten benötigt werden.

Aufgabe der Erfindung ist es, einen Überrollbügel der eingangs genannten Gattung so weiterzubilden, daß er bei guter Funktion einfach und kostengünstig herstellbar ist, einen minimalen Bauraum beansprucht und ein geringes Gewicht aufweist. Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die Verwendung von innenhochdruckgeformten Rahmenteilen für den Überrollbügel ein Überrollbügel geschaffen wird, dessen veränderliche Querschnitte an die auftretenden Belastungen angepaßt sind und der somit einen minimalen Bauraum benötigt.

Die innenhochdruckgeformten Rahmenteile lassen sich einfach und kostengünstig herstellen. Durch die Steckverbindungen zwischen angrenzenden Rahmenteilen ist dieser Überrollbügel extrem belastbar. Außerdem werden durch die Steckverbindungen die Biegespannungen in der Schweißnaht vermindert und damit die Sicherheit des Bauteils erhöht. Durch das Hochdruck-Umformen ändert sich das Materialgefüge und es erfolgt eine Erhöhung der Bauteilfestigkeit und der Verwindungssteifigkeit.

Es läßt sich jede gewünschte Form der Rahmenteile realisieren und die Platzverhältnisse werden optimal ausgenutzt. Anbauteile an den Überrollbügel lassen sich durch das Innenhochdruck-Umformen einfach integrieren.

Die innenhochdruckgeformten Rahmenteile weisen eine hohe Form- und Maßgenauigkeit auf, so daß deren Zusammenbau einfach ist.

Ein Ausführungsbeispiel der Erfindung ist in der nachfolgenden Beschreibung und den zugehörigen Zeichnungen näher erläutert.
Es zeigt
- Fig. 1: eine perspektivische Schrägansicht von vorne auf eine erste Ausführungsform eines Überrollbügels,

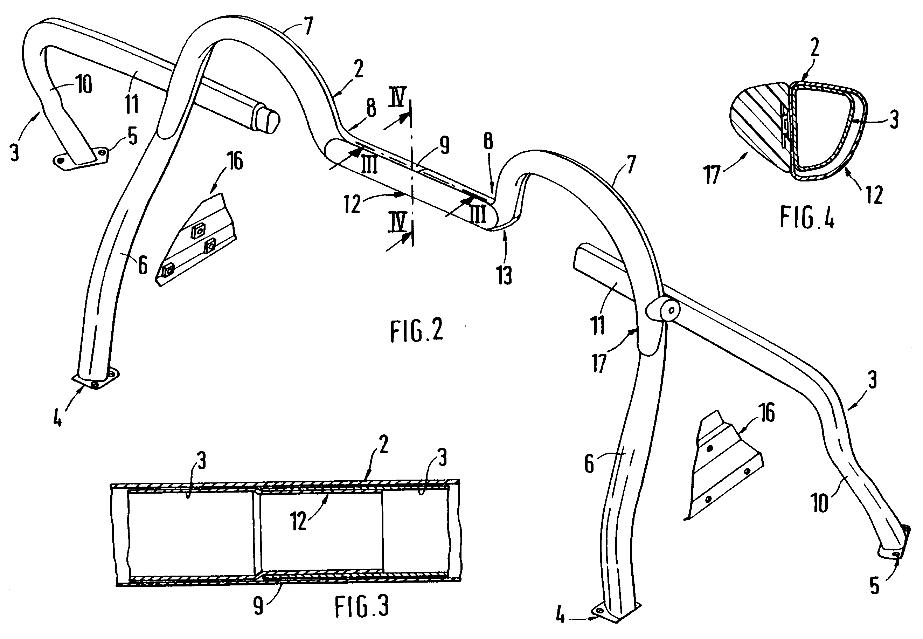

- Fig. 2: die Einzelteile der ersten Ausführungsform des Überrollbügels in Explosionsdarstellung,
- Fig. 3: einen Schnitt nach der Linie III-III der Fig. 2 in größerem Maßstab,
- Fig. 4: einen Schnitt nach der Linie IV-IV der Fig. 2 in größerem Maßstab,
- Fig. 5: eine perspektivische Schrägansicht von vorne auf eine zweite Ausführungsform des Überrollbügels, die nicht Gegenstand des Anspruchs 1 ist.
- Fig. 6: einen Schnitt nach der Linie VI-VI der Fig. 5 in größerem Maßstab,
- Fig. 7: einen Schnitt nach der Linie VII-VII der Fig. 5 in größerem Maßstab,

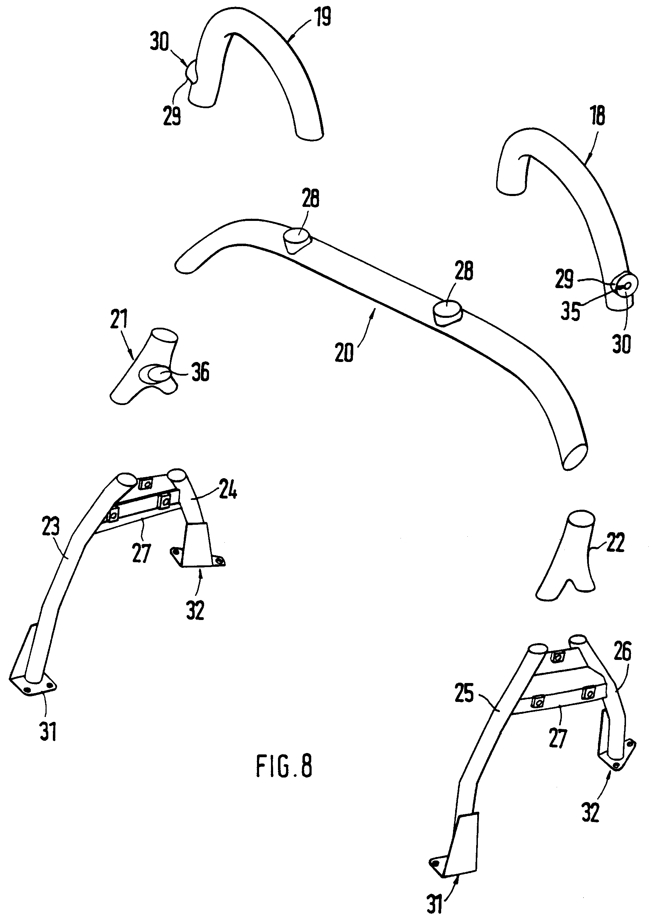

- Fig. 8: die Rahmenteile der zweiten Ausführungsform des Überrollbügels in Explosionsdarstellung.

Zum Schutz der Insassen eines Kraftfahrzeuges, insbesondere eines nicht näher dargestellten zweisitzigen Cabriolets ist hinter den beiden vorderen Sitzen eine durch einen Überrollbügel 1 gebildete Überroll-Sicherheitsvorrichtung vorgesehen.

Der Überrollbügel 1 ist aus mehreren miteinander verbundenen hohlprofilförmigen Rahmenteilen 2, 3 zusammengesetzt und an seinen seitlich außenliegenden unteren Enden unter Zwischenschaltung von Montageplatten 4, 5 am feststehenden Aufbau befestigt.

Erfindungsgemäß ist vorgesehen, daß der Überrollbügel 1 innenhochdruckgeformte Rahmenteile 2, 3 umfaßt. Vorzugsweise werden sämtliche Rahmenteile 2, 3 des Überrollbügels 1 durch innenhochdruckgeformte Rahmenteile gebildet.

Es besteht jedoch die Möglichkeit, daß zumindest einzelne Rahmenteile 2, 3 durch geradlinige oder gebogene hohlprofilförmige Rahmenteile 2, 3 gebildet werden, die über ihre Längserstreckung einen gleichbleibenden Querschnitt aufweisen und nicht innenhochdruckgeformt sind.

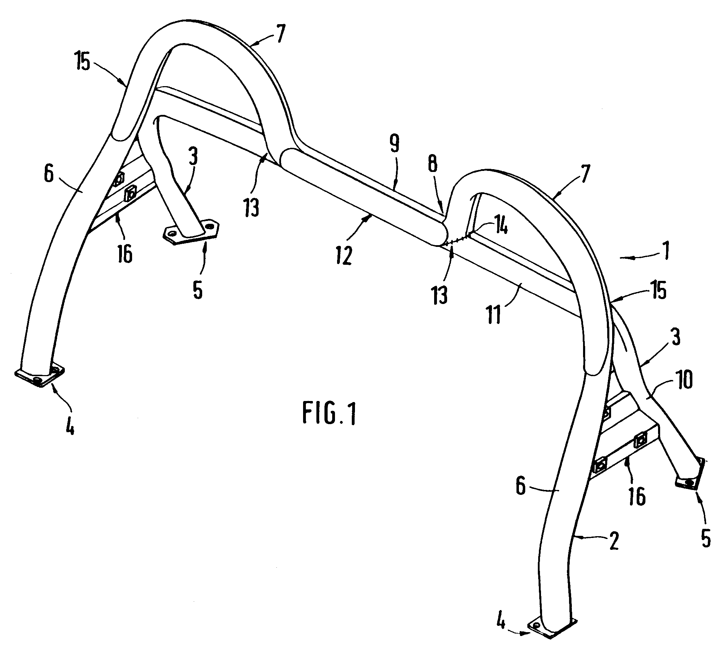

Die in Fig. 1 dargestellte erste Ausführungsform des Überrollbügels 1 umfaßt ein einteilig ausgebildetes bügelförmiges vorderes Rahmenteil 2 und zwei als Abstützorgane wirkende hintere Rahmenteile 3, die zu einer steifen Rahmenkonstruktion zusammengesetzt sind.

Zur Erzielung einer einfacheren Fertigung kann das vordere Rahmenteil 2 aus zwei im Bereich der Fahrzeugmittellängsebene zusammengesetzten Hälften bestehen, wobei die beiden Hälften entweder stumpf aneinandergesetzt und durch Schweißen oder Löten miteinander verbunden sind oder aber die beiden Hälften überlappen sich abschnittsweise und sind im gemeinsamen Verbindungsbereich ineinandergesteckt (nicht näher dargestellt).

Jede Hälfte des vorderen Rahmenteils 2 umfaßt einen ersten aufrechten Abschnitt 6, an den sich ein bügelförmigen zweiter Abschnitt 7 anschließt, wobei der bügelförmige Abschnitt 7 an seinem innenliegenden Ende 8 in einen etwa waagrecht querverlaufenden dritten Abschnitt 9 übergeht.

Die beiden hinteren Rahmenteile 3 setzen sich jeweils aus einem schräg nach oben und vorne verlaufenden längsgerichteten Bereich 10 und einem querverlaufenden Bereich 11 zusammen, wobei die hinteren Rahmenteile 3 im gemeinsamen Verbindungsbereich 12 ineinandergesteckt und durch den querverlaufenden Abschnitt 9 des vorderen Rahmenteils 2 hindurchgeführt sind.

Das vordere Rahmenteil 2 weist im Übergangsbereich des bügelförmigen zweiten Abschnitts 7 zum waagrechten querverlaufenden dritten Abschnitt 9 Öffnungen 13 zum Hindurchführen der hinteren Rahmenteile 3 auf. Die hinteren Rahmenteile 3 sind im Bereich der Öffnungen 13 durch eine umlaufende Verschweißung 14 mit dem vorderen Rahmenteil 2 verbunden.

Ferner sind die hinteren Rahmenteile 3 örtlich, und zwar in einem außenliegenden Bereich der bügelförmigen Abschnitte 7 bei 15 mit dem vorderen Rahmenteil 2 verschweißt. Hierzu können an einem oder an beiden Rahmenteilen 2, 3 örtlich Abflachungen ausgebildet sein, an denen sich die Rahmenteile 2, 3 berühren.

Unterhalb dieser Schweißverbindung ist zwischen jedem hinteren Rahmenteil 3 und dem vorderen Rahmenteil 2 jeweils eine sich in Längsrichtung erstreckende plattenförmige Konsole 16 vorgesehen, die mit beiden Rahmenteile 2, 3 fest verbunden ist.

Die Konsole 16 kann als ebene oder profilierte Platte ausgebildet sein und dient einerseits der Versteifung des Überrollbügels 1 und andererseits zur Anbindung von Anbauteilen.

Der Überrollbügel 1 ist im mittleren Verbindungsbereich 12 abschnittsweise mehrlagig (drei oder vier ineinanderliegende Hohlquerschnitte) ausgebildet und somit stark belastbar.

Auf der den Insassen zugekehrten Seite ist das vordere Rahmenteil 2 abschnittsweise mit einer Polsterung 17 versehen, die mit dem vorderen Rahmenteil 2 verbunden ist. Dies kann durch Klipsen, Schrauben oder dergleichen erfolgen. Die innenhochdruckgeformten Rahmenteile 2, 3 weisen entlang ihrer Längserstreckung veränderliche Querschnitte und gerade oder gebogene Längsachsen auf. Die Querschnitte sind an die auftretenden Belastungen angepaßt und können jede beliebige Form (z.B. oval, elliptisch oder dergleichen) aufweisen.

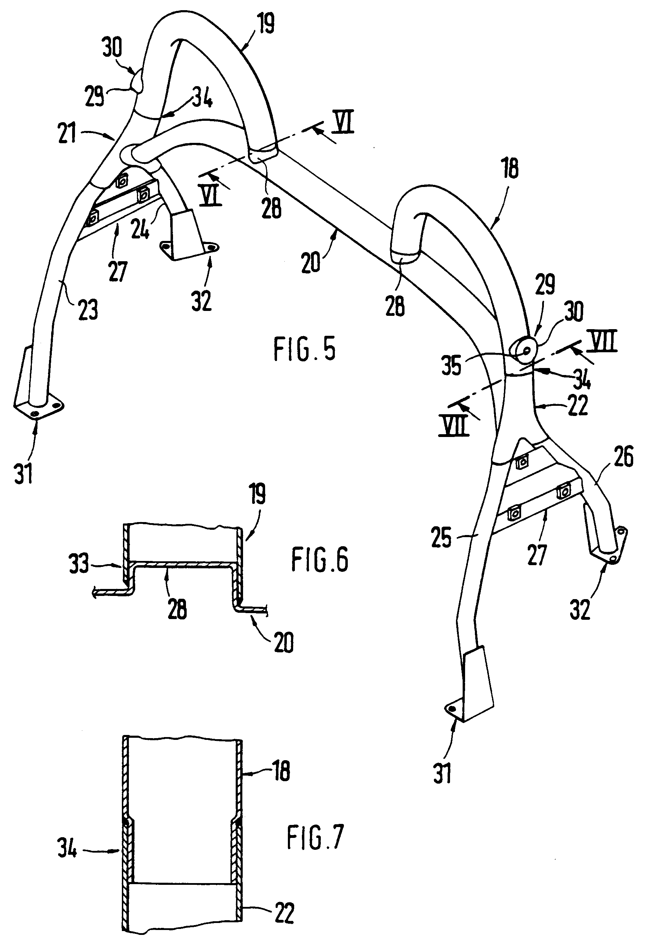

Die in Fig. 5 dargestellte zweite Ausführungsform des Überrollbügels 1 umfaßt mehrere Bauteile als die erste Ausführungsform und setzt sich aus Rahmenteilen 18 bis 26 und zwei Konsolen 27 zusammen, wobei sämtliche Rahmenteile 18 bis 26 durch innenhochdruckgeformte Rahmenteile gebildet werden.

Die Rahmenteile 18, 19 werden durch zwei Bügelabschnitte gebildet, die an ihrem einen Ende mit dem als Querrohr ausgebildeten Rahmenteil 20 fest verbunden sind. Ferner sind die Rahmenteile 18, 19 und 20 an die knotenelementförmigen Rahmenteile 21, 22 angeschlossen. Von jedem knotenelementförmigen Rahmenteil 21, 22 sind zwei weitere Rahmenteile 23, 24 bzw. 25, 26 weggeführt, die als vordere und hintere Stützfüsse ausgebildet sind.

Sämtliche Rahmenteile 18 bis 26 sind in gemeinsamen Verbindungsbereichen abschnittsweise ineinandergesteckt und zusätzlich durch Kleben, Schweißen, Löten oder dergleichen miteinander verbunden.

Am Rahmenteil 20 sind zur Anbindung der darüberliegenden bügelförmigen Abschnitte 18, 19 örtlich nach oben gerichtete Ausbeulungen 28 vorgesehen, auf die die Enden der Rahmenteile 18, 19 aufgeschoben sind (formschlüssige Verbindung).

An den Außenseiten der Rahmenteile 2 bzw. 18, 19 sind ebenfalls örtlich Ausbeulungen 29 mit Anbindungsflächen 30 vorgesehen, an denen Anbauteile wie Gurtumlenkbeschläge oder dergleichen befestigbar sind. Zur Befestigung der Anbauteile sind im Bereich der Anbindungsflächen 30 Gewindebohrungen 35 oder Schweißmuttern vorgesehen.

An den unteren Enden der Rahmenteile 23, 24, 25 und 26 sind ebenfalls Montageplatten 31, 32 angebracht, die am angrenzenden Aufbau angeschraubt sind.

Die etwa Y-förmigen Rahmenteile 21, 22 umgreifen in den Verbindungsbereichen 34 untere Enden der Rahmenteile 18, 19. Obere Enden der Rahmenteile 23, 24, 25 und 26 sind in Stutzenabschnitte der Rahmenteile 21, 22 eingesteckt. Ferner weisen beide Rahmenteile 21, 22 auf der dem Rahmenteil 20 zugekehrten Seite jeweils eine Ausbeulung 36 auf, auf die ein Endbereich des Rahmenteils 20 aufgeschoben ist.

Die einzelnen Rahmenteile 2, 3 bzw. 18 bis 26 des Überrollbügels 1 werden im Ausgangszustand durch gerade zylindrische Rohrrohlinge gebildet, die entlang ihrer Längserstreckung einen gleichbleibenden Querschnitt aufweisen. Der Querschnitt des Rohrrohlings kann kreisförmig, oval, drei- oder viereckig sein, wobei Rohrrohlinge aus Leichtmetall gefertigt sind.

Die Rohrrohlinge definierter Länge werden sodann grob vorgebogen und in ein mehrteiliges Formnestwerkzeug eingelegt und nachfolgend mittels eines Innenhochdruck-Umformens in die gewünschte Endform gebracht. In der Endform weisen die Rahmenteile eine vom Ausgangszustand veränderliche Querschnittsform auf.

Nach der Fertigung der einzelnen Rahmenteile 2, 3 bzw. 18 bis 26 werden diese ineinandergesteckt und zusätzlich durch Kleben, Schweißen, Löten oder dergleichen miteinander verbunden. Ferner werden an den unteren Enden der Rahmenteile 2, 3 bzw. 23 bis 26 die Montageplatten 4, 5 bzw. 31, 32 befestigt (z.B. durch Schweißen) und die längsverlaufenden Konsolen 16 bzw. 27 mit den Rahmenteilen 2, 3 bzw. 23 bis 26 verbunden.

## Patentansprüche

1. Überrollbügel für ein Kraftfahrzeug, insbesondere für ein Cabriolet, der aus mehreren miteinander verbundenen Rahmenteilen zusammengesetzt und an seinen seitlich außenliegenden unteren Enden am feststehenden Aufbau befestigt ist, **dadurch gekennzeichnet**, daß der Überrollbügel (1) innenhochdruckgeformte Rahmenteile (2, 3 bzw. 18 bis 26) umfaßt, und daß der Überrollbügel (1) aus einem ein- oder mehrteilig ausgebildeten bügelförmigen vorderen Rahmenteil (2) und zwei als Stützorgane wirkenden hinteren Rahmenteilen (3) besteht, wobei die hinteren Rahmenteile (3) im gemeinsamen Verbindungsbereich (12) ineinandergesteckt und durch einen querverlaufenden Bereich (9) des vorderen Rahmenteils (2) hindurchgeführt sind.

2. Überrollbügel nach Anspruch 1, **dadurch gekennzeichnet**, daß vorzugsweise sämtliche Rahmenteile (2, 3 bzw. 18 bis 26) des Überrollbügels (1) durch innenhochdruckgeformte Rahmenteile gebildet werden.

3. Überrollbügel nach den Ansprüchen 1 und 2, **dadurch gekennzeichnet**, daß die Rahmenteile (2, 3 bzw. 18 bis 26) des Überrollbügels (1) in gemeinsamen Verbindungsbereichen (12, 33, 34) abschnittsweise ineinandergesteckt und zusätzlich durch Kleben, Schweißen, Löten oder dergleichen miteinander verbunden sind.

4. Überrollbügel nach Anspruch 1, **dadurch gekennzeichnet**, daß das vordere Rahmenteil (2) an seitlichen Enden des querverlaufenden Bereiches (9) örtlich Öffnungen (13) zum Hindurchführen der hinteren Rahmenteile (3) aufweist, und daß die hinteren Rahmenteile (3) im Bereich der Öffnungen (13) mit den vorderen Rahmenteilen durch eine umlaufende Verschweißung (14) verbunden sind.

5. Überrollbügel nach Anspruch 1, **dadurch gekennzeichnet**, daß zwischen dem vorderen Rahmenteil (2) und den hinteren Rahmenteilen (3) jeweils eine sich in Längsrichtung erstreckende Konsole (16) vorgesehen ist, die mit beiden Rahmenteilen (2, 3) fest verbunden ist.

6. Überrollbügel nach Anspruch 1, **dadurch gekennzeichnet**, daß die innenhochdruckgeformten Rahmenteile (2, 3 bzw. 18 bis 26) entlang ihrer Längserstreckung veränderliche Querschnitte aufweisen.

7. Überrollbügel nach Anspruch 1, **dadurch gekennzeichnet**, daß an innenhochdruckgeformten Rahmenteilen (2, 20) örtlich Ausbeulungen (28) vorgesehen sind, auf die Endbereiche von angrenzenden Rahmenteilen (18, 19) aufgesteckt sind.

8. Überrollbügel nach Anspruch 1, **dadurch gekennzeichnet**, daß an innenhochdruckgeformten Rahmenteilen (2, 18, 19) Ausbeulungen (29) mit Anbindungsflächen (30) vorgesehen sind.

9. Überrollbügel nach einem oder mehreren der vorangegangenen Ansprüche, **dadurch gekennzeichnet**, daß auf der den Insassen zugekehrten Seite des Überrollbügels (1) an den Rahmenteilen (2) örtlich eine Polsterung (17) angebracht ist.

10. Verfahren zur Herstellung eines Überrollbügels für ein Kraftfahrzeug nach Anspruch 1, **dadurch gekennzeichnet**, daß zumindest einzelne Rahmenteile des Überrollbügels (1) durch einen geraden zylindrischen Rohrrohling gebildet werden, wobei jeder Rohrrohling in einem ersten Umformungsprozeß vorgebogen und in ein Formnestwerkzeug eingelegt und nachfolgend mittels eines Innenhochdruck-Umformens in eine Endform bringbar ist, und daß die hinteren Rahmenteile (3) im gemeinsamen Verbindungsbereich (12) ineinandergesteckt und durch einen querverlaufenden Bereich (9) des vorderen Rahmenteils (2) hindurchgeführt sind und anschließend durch Kleben, Schweißen, Löten oder dergleichen fest miteinander verbunden werden.

## Claims

1. A roll bar for a motor vehicle, in particular for a cabriolet, which is formed from a plurality of frame parts connected together and which is secured at its laterally outer lower ends to the fixed bodywork, **characterized in that** the roll bar (1) comprises frame parts (2, 3 and 18 to 26 respectively) shaped by internal high pressure, and the roll bar (1) comprises a yoke-shaped front frame part (2) formed in one or more pieces and two rear frame parts (3) acting as support members, wherein the rear frame parts (3) are inserted one into the other in the common connexion area (12) and pass through a transversely extending area (9) of the front frame part (2).

2. A roll bar according to Claim 1, **characterized in that** preferably all the frame parts (2, 3 and 18 to 26 respectively) of the roll bar (1) are formed by frame parts shaped by internal high pressure.

3. A roll bar according to Claims 1 and 2, **characterized in that** the frame parts (2, 3 and 18 to 26 respectively) of the roll bar (1) are partly inserted one into the other in common connexion areas (12, 33, 34) and are additionally joined to one another by adhesion, welding, soldering or the like.

4. A roll bar according to Claim 1, **characterized in that** the front frame part (2) is provided locally with openings (13) for passing through the rear frame parts (3) at lateral ends of the transversely extending area (9), and the rear frame parts (3) are joined in the region of the openings (13) to the front frame parts by a continuous weld (14).

5. A roll bar according to Claim 1, **characterized in that** one respective bracket (16) extending in the longitudinal direction and securely connected to the two frame parts (2, 3) is provided between the front frame part (2) and the rear frame parts (3).

6. A roll bar according to Claim 1, **characterized in that** the frame parts (2, 3 and 18 to 26 respectively) shaped by internal high pressure have varying cross-sections along their longitudinal extension.

7. A roll bar according to Claim 1, **characterized in that** pressed-out portions (28), onto which end areas on adjacent frame parts (18, 19) are fitted, are provided locally on frame parts (2, 20) shaped by internal high pressure.

8. A roll bar according to Claim 1, **characterized in that** pressed-out portions (29) with attachment faces (30) are provided on frame parts (2, 18, 19) shaped by internal high pressure.

9. A roll bar according to one or more of the preceding Claims, **characterized in that** a padded portion (17) is attached locally to the frame parts (2) on the side of the roll bar (1) facing the occupants.

10. A method of producing a roll bar for a motor vehicle according to Claim 1, **characterized in that** at least individual frame parts of the roll bar (1) are formed by a straight cylindrical blank, wherein each blank is bent forward in a first shaping process and is inserted in a blow-moulding tool and can then be put into a final shape by means of an internal high-pressure shaping, and the rear frame parts (3) are inserted one into the other in the common connexion area (12) and pass through a transversely extending area (9) of the front frame part (2) and are then securely joined to one another by adhesion, welding, soldering or the like.

## Revendications

1. Arceau de sécurité pour un véhicule automobile, en particulier pour un cabriolet, qui est composé de plusieurs parties de cadre reliées entre elles et qui est fixé, à ses extrémités inférieures situées latéralement à l'extérieur, à la carrosserie fixe, caractérisé en ce que l'arceau de sécurité (1) comprend des parties de cadre (2, 3 ou 18 à 26) moulées sous haute pression interne, et en ce que l'arceau de sécurité (1) est constitué d'une partie de cadre avant (2) en forme d'arceau, réalisée en une ou plusieurs parties, et de deux parties de cadre arrière (3) agissant comme des organes d'appui, les parties de cadre arrière (3) étant emboîtées l'une dans l'autre dans la zone de liaison (12) commune et étant guidées à travers une zone (9) s'étendant transversalement de la partie de cadre avant (2).

2. Arceau de sécurité selon la revendication 1, caractérisé en ce que de préférence toutes les parties de cadre (2, 3 ou 18 à 26) de l'arceau de sécurité (1) sont formées par des parties de cadre moulées sous haute pression interne.

3. Arceau de sécurité selon les revendications 1 et 2, caractérisé en ce que les parties de cadre (2, 3 ou 18 à 26) de l'arceau de sécurité (1) sont emboîtées l'une dans l'autre par endroits dans des zones de liaison (12, 33, 34) communes et sont assemblées en supplément entre elles par collage, soudage, brasage ou similaire.

4. Arceau de sécurité selon la revendication 1, caractérisé en ce que la partie de cadre avant (2) présente des ouvertures (13) locales, à des extrémités latérales de la zone s'étendant transversalement, pour le passage à travers celles-ci des parties de cadre arrière (3), et en ce que les parties de cadre arrière (3) sont assemblées, dans la zone des ouvertures (13), avec les parties de cadre avant par un soudage (14) périphérique.

5. Arceau de sécurité selon la revendication 1, caractérisé en ce qu'entre la partie de cadre avant (2) et les parties de cadre arrière (3) est prévue chaque fois une console (16) s'étendant dans la direction longitudinale, qui est assemblée fixement aux deux parties de cadre (2, 3).

6. Arceau de sécurité selon la revendication 1, caractérisé en ce que les parties de cadre (2, 3 ou 18 à 26) moulées sous haute pression interne présentent des sections variant le long de leur extension longitudinale.

7. Arceau de sécurité selon la revendication 1, caractérisé en ce que des bossages (28) locaux sont prévus sur des parties de cadre (2, 20) moulées sous haute pression interne, sur lesquels sont emboîtées les zones d'extrémité de parties de cadre (18, 19) adjacentes.

8. Arceau de sécurité selon la revendication 1, caractérisé en ce que des bossages (29) avec des surfaces d'attache (30) sont prévus sur des parties de cadre (2, 18, 19) moulées sous haute pression interne.

9. Arceau de sécurité selon une ou plusieurs des revendications précédentes, caractérisé en ce qu'un rembourrage (17) est fixé localement sur les parties de cadre (2), sur le côté de l'arceau de sécurité (1) tourné vers les passagers.

10. Procédé de fabrication d'un arceau de sécurité pour un véhicule automobile selon la revendication 1, caractérisé en ce qu'au moins des parties de cadre individuelles de l'arceau de sécurité (1) sont formées par une ébauche de tube cylindrique rectiligne, chaque ébauche de tube étant précintrée au cours d'un premier processus de déformation et placée dans un outil de moulage et peut ensuite être amenée dans une forme définitive au moyen d'un formage sous haute pression interne, et en ce que les parties de cadre arrière (3) sont emboîtées l'une dans l'autre dans la zone de liaison (12) commune et sont guidées à travers une zone (9) s'étendant transversalement de la partie de cadre avant (2) et sont ensuite fixement assemblées entre elles par collage, soudage brasage ou similaire.
